# EUROPEAN PATENT SPECIFICATION

(11) **EP 1 796 352 B1**
(45) Date of publication and mention of the grant of the patent: **13.03.2013**
(21) Application number: 05257504.0
(22) Date of filing: 06.12.2005
(51) Int. Cl.: H04M 1/56, H04M 1/247, H04M 1/23, G06F 3/023, H04M 3/42

(54) **Device, system, and method for informing users of functions and characters associated with telephone keys**
Gerät, System und Verfahren, um einen Benutzer über mit einer Telefontastatur verknüpften Funktionen und Zeichen zu informieren
Dispositif, système et procédé pour informer un utilisateur sur des fonctions et charactères associés avec un clavier d'un téléphone

(43) Date of publication of application: 13.06.2007
(73) Proprietor: Research In Motion Limited, Waterloo, ON N2L 3W8 (CA)
(72) Inventor: Griffin, Jason T., Kitchener, Ontario N2P 2L3 (CA)
(74) Representative: Fennell, Gareth Charles

(56) References cited:
- EP-A- 0 567 333
- EP-A- 1 263 195
- EP-A- 1 317 117
- DE-A1- 10 027 146
- FR-A- 2 837 941
- GB-A- 2 402 650
- US-A- 5 917 905
- US-B1- 6 243 460
- US-B1- 6 307 541
- US-B1- 6 519 482

## Description

This disclosure concerns a technique for entering alphabetic phone numbers on a non-ITU Standard E.161 phone keypad arrangement, such as that utilized on mobile communication devices having either full QWERTY or reduced QWERTY formats.

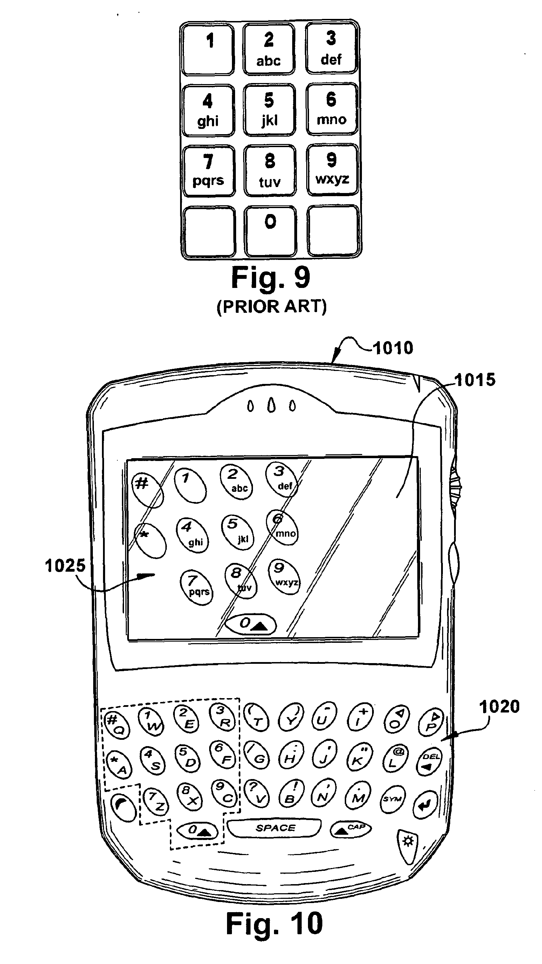

When entering phone numbers that contain letters, for example, 1-800-FLOWERS, or when navigating some computer controlled answering systems, such as those that require entry of the last name of a person in a directory, the user is entering Dual-Tone Multi-Frequency (DTMF) codes for numbers that have certain letters associated with them in an ITU Standard E.161 phone keypad, shown in Fig. 9. When you have a non-standard keypad, like a QWERTY or a reduced QWERTY that is combined with a numeric phone arrangement on a keyboard, entering letters when in phone mode becomes difficult. An example of this type of keyboard is provided on the Blackberry 7100 series for reduced QWERTY arrangement and on the Blackberry 6230 series for a full-sized QWERTY alphabetic arrangement.

One attempt to solve this problem is to require the user to hold down the ALT key and then multi-tap the letter keys until the appropriate letter is selected for each letter in the phone number. The name 1-800-FLOWERS appears on the display screen, but the user is not informed of the actual number being dialled.

Another related problem involves answering services that have automated menu systems that are controlled by DTMF codes. Inputting DTMF codes with these systems takes a long time to play the recorded messages that accompany the answering system menus. Furthermore, voice mail systems are also controlled over the phone by DTMF codes.

This requires the user to either listen to all the control options or memorize which keys correspond to which options. One attempt to solve this is to provide the user with a reference card, but this involves the inconvenience of carrying the reference card around and pulling it out when needed.

US-B-6243460 discloses a telephone with dual keypads. FR-A-2831941 discloses a telephone with only numeric keys which displays textual letters. EP-A-1317117 discloses an interactive voice response system. US-B-6307541 discloses a mobile phone with a virtual representation of the keypad to enter chinese characters.

The present invention is set out in the claims:
Fig. 1 is a front view of an example mobile communication device displaying an example help screen.
Fig. 2 is a flow-chart of an example method for receiving help screen information from an example answering service.
Fig. 3 is a front view of an example mobile communication device showing an example directory help screen.
Fig. 4 is an example graphical progression of a selection of a second tier help screen on an example mobile device.
Fig. 5 is an example of a mobile communication device displaying a help screen for an example answering service menu system.
Fig. 6 is a flow-chart of an example method for a user customized help screen that is activated by a user set phone number.
Fig. 7 is an example mobile communication device displaying a screen with an alphabetically represented phone number above its corresponding numeric number.
Fig. 8 is a schematic for an example mobile communication device.
Fig. 9 is an ITU Standard E.161 phone keypad.
Fig. 10 is another example mobile communication device.

This disclosure concerns a mobile communication device having a reduced format keyboard, as described in US-A-20040165924. This disclosure also concerns a full-size alphabetic format keyboard, such as that used on the Blackberry 6230 device. Reduced format keyboards include the alphabetic characters A-Z, and are arranged in a standard alphabetic keyboard format. The alphabetic characters are presented on fewer than twenty-six keys such that some alphabetic characters share keys with other alphabetic characters. The keyboard also includes a numeric phone arrangement of numbers 0-9, such that the mobile communication device may be used for sending and receiving phone calls, and for sending and receiving emails, among other types of messages, such as SMS, or otherwise. Full-size keyboards include alphabetic characters A-Z that are arranged in a standard alphabetic keyboard format and a numeric phone arrangement of numbers 0-9 shares keys with the alphabetic characters.

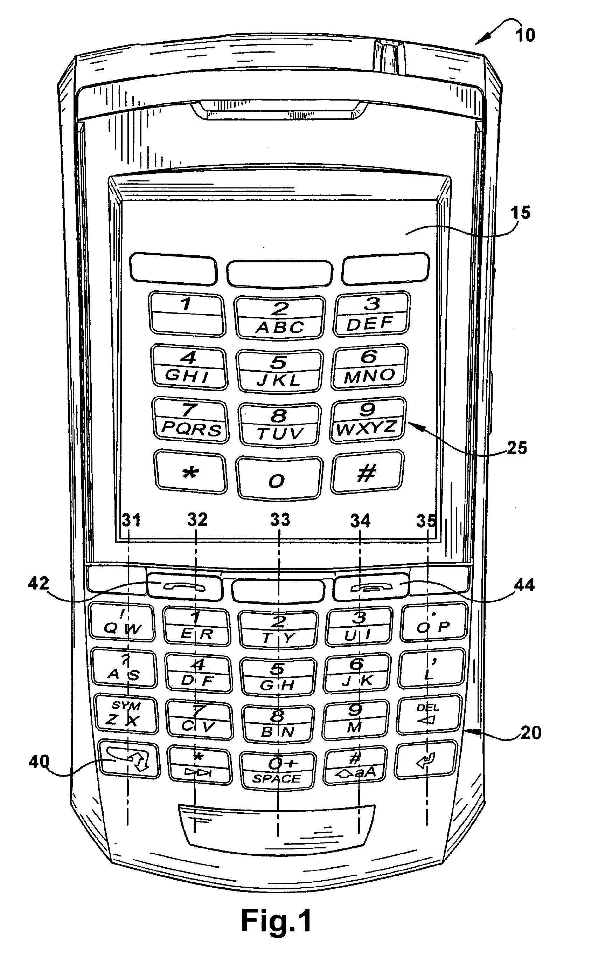

The examples described herein provide different techniques for informing a user of the letters or functions that correspond to the numbers of a phone keypad. In a first example, shown in Fig 1, an example mobile device 10 includes a display screen 15, and a keypad 20. The keypad includes a reduced format QWERTY arrangement of indicia with an overlaid numeric phone key arrangement. The numeric portion of the indicia is consistent with an ITU Standard E.161 format. The display screen 15 is operable to display a help screen 25 that is a virtual representation of a portion of the keypad 20. The virtual representation in this example is an image that approximates the size and shape of the middle three columns 32-34 of the keypad 20. Other types of virtual representations may also be used that are not images approximating the size and shape of the keys of the keypad 20. The screen 15 is an ITU Standard E.161 phone key arrangement that includes both numeric and alphabetic components of the standard. This informs the user of what key strokes are necessary in order to enter letters and the corresponding DTMF codes that are shown on the virtually represented keys.

In the example method, the user enters a command to pull up a help screen 25 that displays an ITU Standard E.161 phone key arrangement. For example, the user may select the "ALT" key 40, or some other control key to initiate a command to display the help screen 25 on the display 15. The help screen 25 could alternatively be displayed via a pull down menu activated by a thumbwheel or another key, or in any shown way. It could also be displayed automatically upon putting the example mobile communication device 10 into a telephone mode. Any of these techniques could be programmed into the device's programming software.

Although the three middle columns of keys 32-34 on the keyboard 20 will normally function to enter DTMF codes corresponding to the alphabetic letters and numbers on the ITU Standard E.161 phone key arrangement, the help screen 25 informs the user of the alphabetic character that corresponds to the numeric indicia present on the keys. The DTMF codes will not be entered according to the alphabetic indicia printed on the keypad 20. The shape of the displayed keys on the help screen 25, as shown, corresponds to that of the keys in the three middle columns 32-34 on the keypad 20. This enhances the user recognition that the help screen 25 corresponds to the keypad 20. Alternatively, key shapes shown on the display do not have to be the same as those used on the keypad.

By using the help screen 25, the user can locate the key corresponding to the desired letter and press the corresponding key on the keypad 20 of the device 10 to obtain the appropriate DTMF code. For example, the phone number 1-800-FLOWERS would be entered by pressing the keys on the keyboard with the numeric indicia 1, 8, 0, 0, 3, 5, 6, 9, 3, 7, 7. As the number is entered, the numbers can be shown in the upper part of the display screen 15 that is not covered by the virtual representation of the middle column portion of the keypad, or on some other part of the screen 15. After the last number is pressed and the phone call is initiated by pressing, for example, the call key 42 in the second column 32, the help screen 25 may automatically disappear or it may stay up until the call is ended, for example, by pressing the call-end key 44. Alternatively, the user could be required to input a command, such as the "ALT" command, to make the help screen disappear.

The help screen 25 can also be used when entering alphabetic information after a call is initiated. For example, some answering services allow a user to dial the name of a person in the answering service directory. These answering services are programmed to receive alphabetic information from an ITU standard E.161 phone key arrangement. Thus, a user can pull up the help screen 25 and use the alphabetic letters displayed on the help screen keys as a guide to the corresponding keys on the keypad 20. In another example, the help screen 25 could be used to assist the user in entering alphanumeric information for relating reference numbers over the phone such as account numbers that include alphabetic characters.

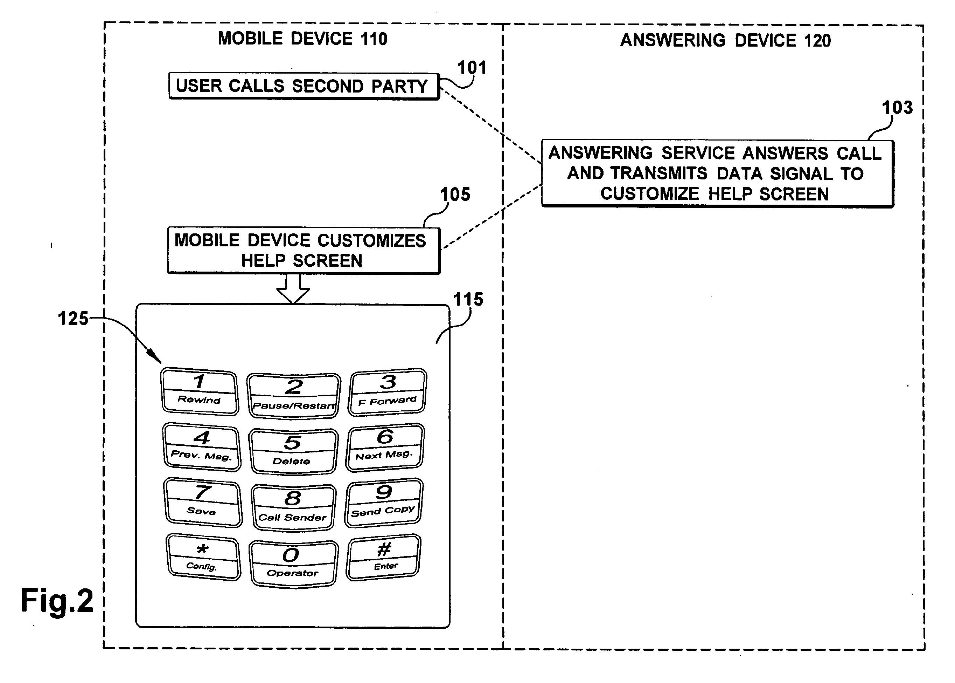

In another example, a help screen 125 is programmable to include customized indicia displayed on the keys shown on the help screen 125. For example, as shown in Fig. 2, a user initiates a call to a second party 101 on a mobile device 110. In response to the call, an answering service 120 answers the call and sends a data signal that tells the mobile device 10 to display a help screen 25 that is customized for that phone call 103. The mobile device receives the data signal and generates a customized help screen 125.

As shown in Fig. 2, the answering service 120 in this example is a voice mail system in which the user has a mail box. The text shown on the virtual representation of the keys on the help screen 125 indicates which key on the keyboard of the mobile device 110 will be operable to input the desired command. This technique allows the user to not have to remember the command functions for his voice mail, listen to a long message that reviews the command functions associated with each number, or carry a reference card. Other types of data could alternatively be transmitted by the answering service or other third party. In addition, the type of information transmitted could change depending upon the location of the user in the voice mail system's programming. Examples of other types of help screens are discussed below.

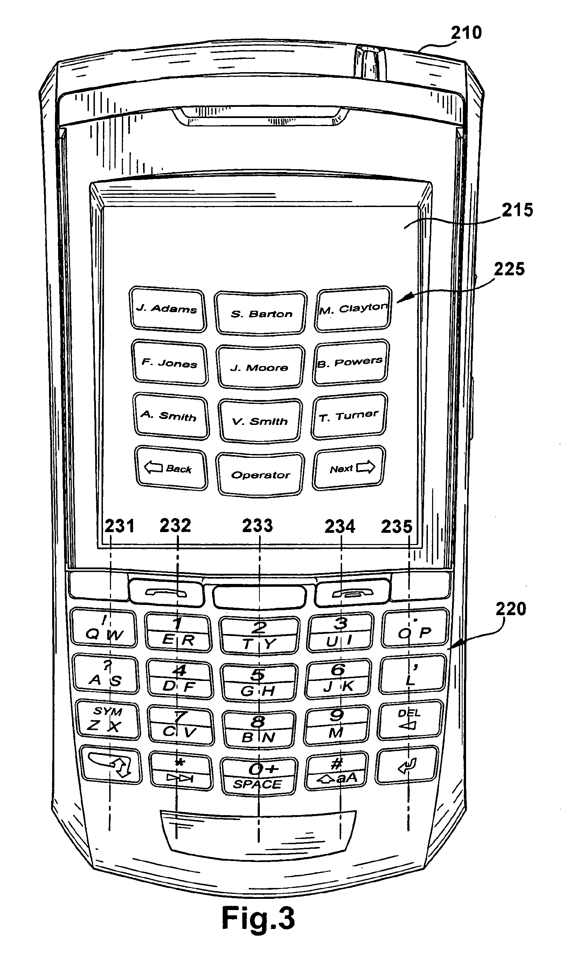

Another example application includes a directory system implemented as shown in Fig 3. The help screen 225 in Fig. 3 shows individual names on the top nine keys of the virtual representation of the three middle columns 232-234 of the keyboard. Pressing a key on the keyboard 220 that corresponds to one of the names on the help screen 225 automatically dials that persons extension. By pressing the lower right or lower left keys, other screens of names can be shown, and the operation can be reached by pressing the "O" key.

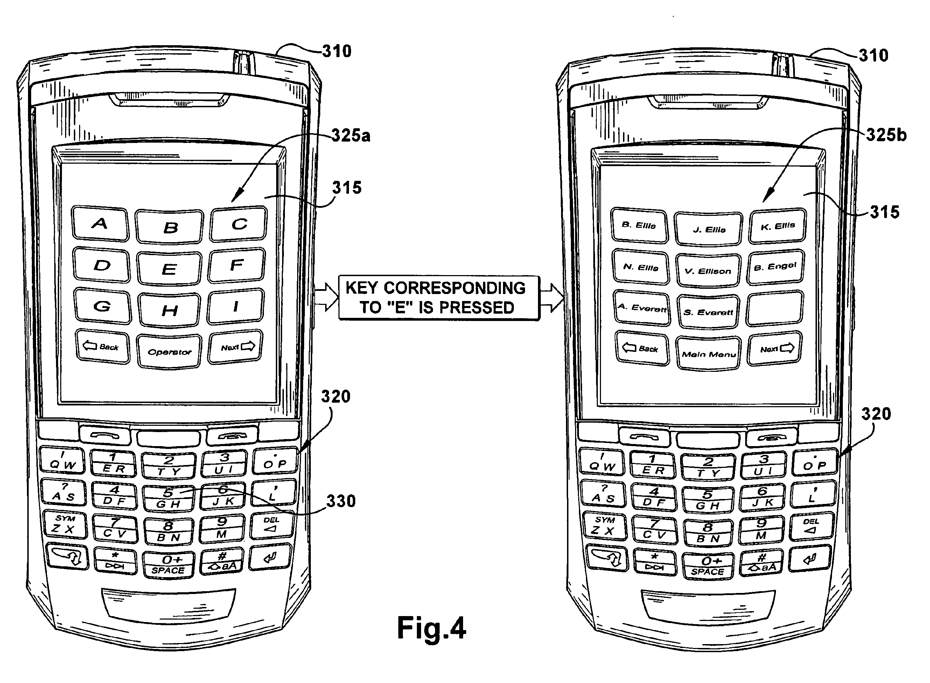

In the example shown in Fig. 4, a tiered directory system is implemented. In a first help screen 325a, an alphabetic directory is transmitted from an answering service or stored on the mobile communication device, and is presented on a virtual representation of a portion of the keypad 320. By pressing one of the keys on the keypad 320, for example, the key 330 that corresponds to the letter E, a second help screen 325b is generated. The second help screen 325b lists last names starting with the letter "E." The user can then press the key on the keypad 320 that corresponds to the name they wish to dial, and the extension for that person will be dialed. This tiered directory would be appropriate for a larger organization.

Alternatively, the ITU standard E.161 alphabetic arrangement could be used as the first help screen 325a, instead of just a single letter for each key. The second help screen 325b would then have a group of names corresponding to the grouping of letters on the ITU standard E.161 alphabetic arrangement.

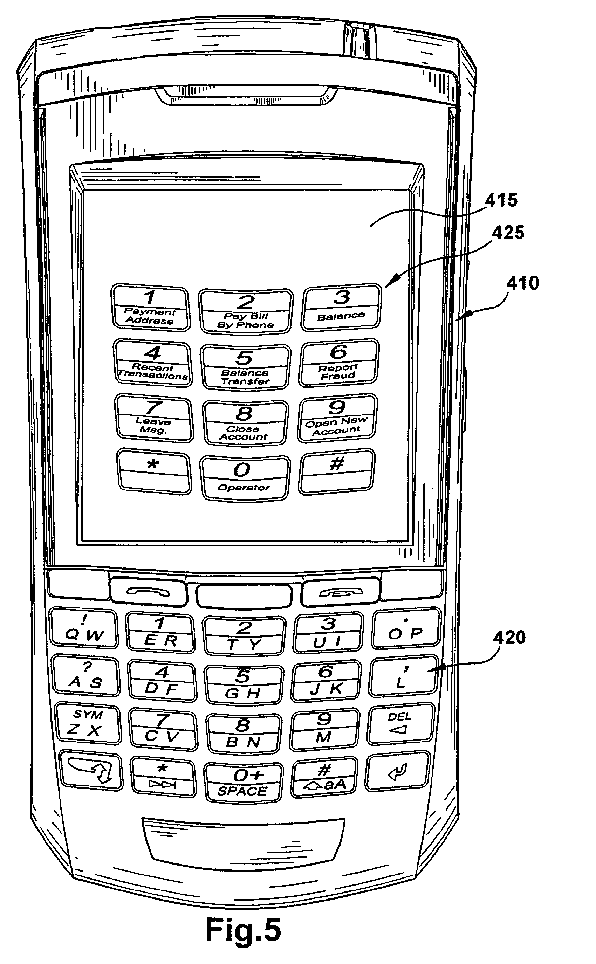

The help screen can also be used with many other telephone menu systems that one might encounter in calling any organization that has an answering service with options. The answering service could send a data transmission with help information for navigating the menu system, or it could be stored on the mobile communication device. For example, a credit card company might have an option menu as shown in Fig. 5. Instead of a user having to listen to the entire menu, they can see the options graphically and more quickly on a help screen with a virtual representation 425 as soon as the data signal is transmitted, processed, and displayed on the display screen 415. If the help information is stored, the user will see the virtual representation on the help screen 425 as soon as the help information is processed and displayed on the display screen 415.

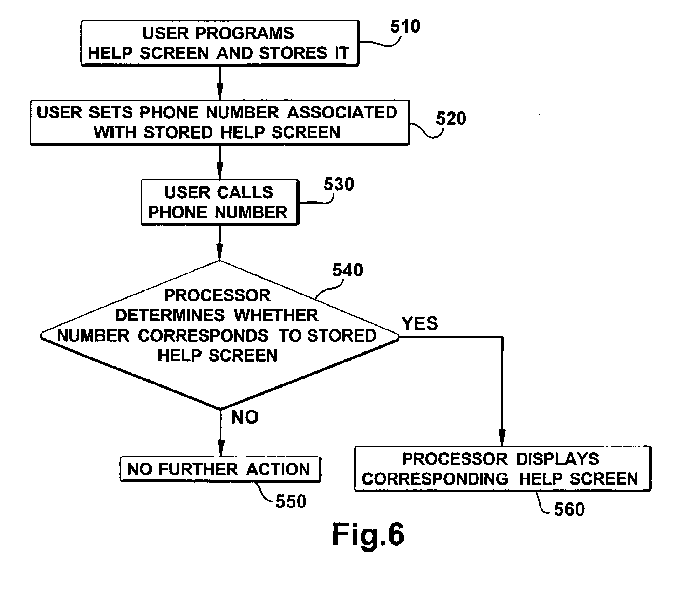

In another example, shown in Fig. 6, users can customize a help screen to display specified messages by programming the mobile device themselves. In the first step 510, the user programs the help screen to display specified messages on specified keys and stores it in memory on the mobile device. These messages may correspond to the user's personal or work voice mail, such as the help screen 125 shown in Fig. 2. Other example messages may correspond to a menu system for an organization's answering service that the user frequently accesses, among other messages that might correspond to telephone keys.

In the second step 520, the user may specify a phone number and associate it with the stored help screen. Then in the third step 530 the user calls a phone number. After the phone number is called, in the fourth step 540, the processor on the mobile device determines whether the number called is a number associated with a stored help screen. If it is not, then no further action is taken 550, and the call takes place as normal. If the number called is associated with a stored help screen, then in a fifth step that help screen is displayed 560. The help screen may be closed when the call disconnects.

As an alternative to the technique shown in Fig. 6, a stored help screen need not be associated with a phone number. In this example, the user can manually select the help screen whenever it is desired by pressing a key, a series of keys, such as the "ALT" key, navigating through a menu system, or by other known methods.

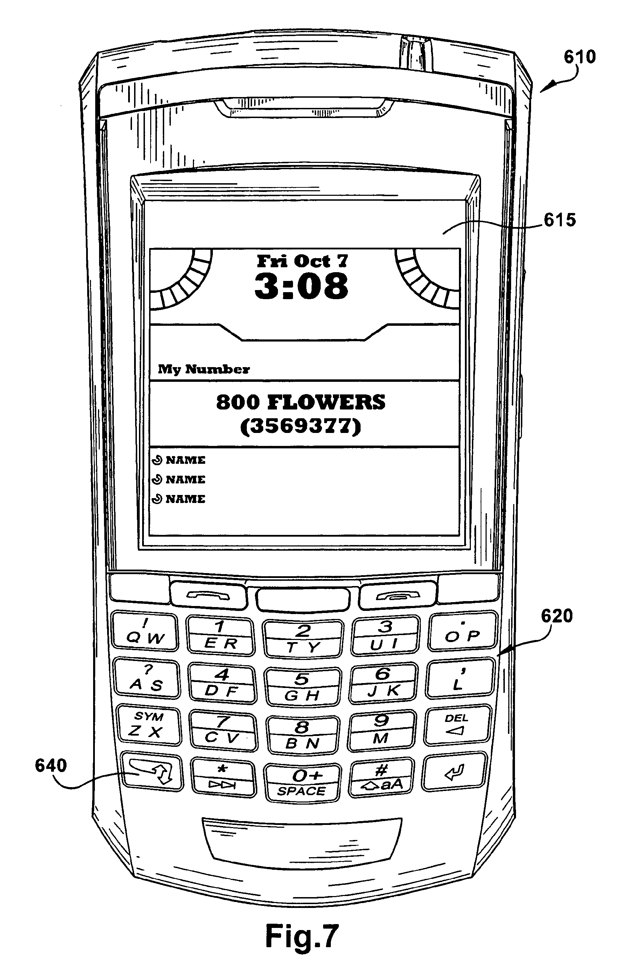

In another example, shown in Fig. 7, the user enters a phone number defined by letters, in this case "1-800-FLOWERS," just as they are printed on the non-ITU standard E.161 keypad. However, the numbers corresponding to the letters are shown on the display screen 615 of the mobile device 610 as additional display information. This feature prevents confusion and lets the user know that they are dialing a number and what numbers the letters represent.

In Fig. 7, the corresponding numbers are shown displayed beneath the letters on the screen, but the numbers could be displayed at other locations, such as above or beside the keys, if desired. The display location of the numbers is not critical.

To trigger dialing by letter instead of by number, as known in the art, the user can press the ALT key 640 in combination with an alphabetic key. The user may also use a multi-tap technique to dial by letter instead of number. A user could alternatively activate a control key or some other mechanism instead of using the ALT key 640.

The examples described above could be used to enter DTMF codes into a directory or other system once the recipient of a call has answered. The examples described above could also be utilized on a telephone that has a processor and a display capable of rendering a help screen showing text and associating it with keys on the keypad.

The above described features may also be used with a full-size standard key arrangement, such as the full QWERTY arrangement 1020 shown in Fig. 10. In this case, the numbers share keys with a single alphabetic character. The same problem that existed with a reduced alphabetic keyboard format are also present on a full-size alphabetic arrangement. That is, phone numbers that are given as letters correspond to the ITU standard E.161 key arrangement, and therefore dialing by letter on a full-QWERTY keyboard will not produce the correct DTMF codes. While software may be provided to convert the QWERTY keyboard to dial by letter and produce the correct DTMF codes, the user may still be confused as to what is really being dialed. Therefore a help screen 1025, similar to the one described in Fig. 1, is presented on the display 1015. This help screen 1025, like the help screen of Fig. 1, also is a virtual representation of the associated keys on the keyboard 1020, in that it represents the same shape and arrangement of the keys that are used to enter DTMF codes in the telephone mode. In this example, the virtual representation is shifted to the left side of the display 1015 so as to indicate that the associated keys are located on the left side of the keyboard. This feature better enables the user to readily identify the associated keys.

A help screen such as that shown in Fig. 7 may also be used on the mobile communication device 1010 of Fig. 10, as described above to enable the user to visually see what numbers are being entered to be dialed for the letters that the user presses.

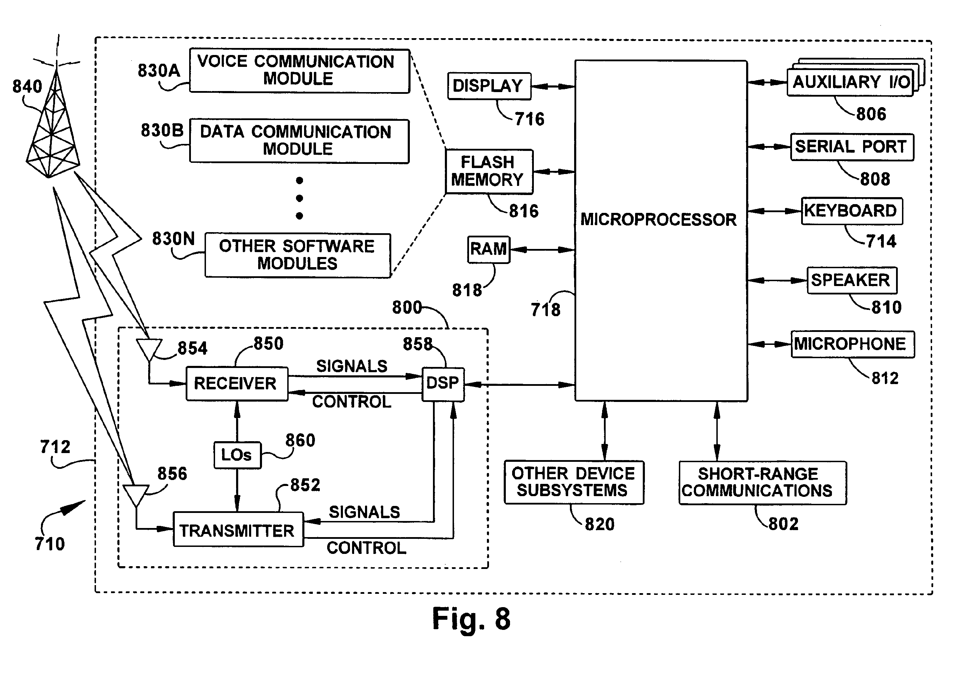

The handheld mobile communication devices, presented in Figures 1, 3, 4, 5, 7, and 10 include similar features, such as a housing, a keyboard, and an output device. These and other features are shown schematically in Figure 8. The output device shown is a display 716, which is preferably a full graphic LCD. Other types of output devices may alternatively be utilized. A processing device 718, which is shown schematically in Fig. 8, is contained within the housing 712 and is coupled between the keyboard 714 and the display 716. The processing device 718 controls the operation of the display 716, as well as the overall operation of the mobile communication device 710, in response to actuation of keys on the keyboard 714 by the user.

The housing 712 may be elongated vertically, or may take on other sizes and shapes, including a clamshell housing structure, among other structures. The keyboard may include a mode selection key, or other hardware or software for switching between text entry and telephony entry.

In addition to the processing device 718, other parts of the mobile communication device 710 are shown schematically in Figure 8. These include a communications subsystem 800; a short-range communications subsystem 802; the keyboard 714 and the display 716, along with other input/output devices 806, 808, 810, and 812; memory devices 816, 818; and various other device subsystems 820. The mobile communication device 710 is preferably a two-way RF communication device having voice and data communication capabilities. In addition, the mobile communication device 710 preferably has the capability to communicate with other computer systems via the Internet.

Operating system software executed by the processing device 718 is preferably stored in a persistent store, such as a flash memory 816, but may be stored in other types of memory devices, such as a read only memory (ROM) or similar storage element. In addition, system software, specific device applications, or parts thereof, may be temporarily loaded into a volatile store, such as a random access memory (RAM) 618. Communication signals received by the mobile communication device may also be stored to the RAM 818.

The processing device 718, in addition to its operating system functions, enables execution of software applications 830A-830N on the device 710. A predetermined set of applications that control basic device operations, such as data and voice communications 830A and 830B, may be installed on the device 710 during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network 840. Preferably, the PIM data items are seamlessly integrated, synchronized and updated via the wireless network 840 with the device user's corresponding data itmes stored or associated with a host computer system. An example system and method for accomplishing these steps is disclosed in "System And Method For Pushing Information From A Host System To A Mobile Device Having A Shared Electronic Address," U.S. Patent No. 6,219,694.

Communication functions, including data and voice communications, are performed through the communication subsystem 800, and possibly through the short-range communications subsystem. The communication subsystem 800 includes a receiver 850, a transmitter 852, and one more antennas 854, 856. In addition, the communication subsystem 800 also includes a processing module, such as a digital signal processor (DSP) 858, and local oscillators (LOs) 860. The specific design and implementation of the communication subsystem 800 is dependent upon the communication network in which the mobile communication device 710 is intended to operate. For example, a mobile communication device 710 may include a communication subsystem 800 designed to operate with the MOBITEX, DATATAC or General Packet Radio Service (GPRS) mobile data communication networks and also designed too operate with any of a variety of voice communication networks, such as AMPS, TDMA, CDMA, PCS, GSM, etc. Other types of data and voice networks, both separate and integrated, may also be utilized with the mobile communication device 710.

Network access requirements vary depending upon the type of communication system. For example, in the MOBITEX and DATATAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile communication device 710 may send and receive communication signals over the communication network 840. Signals received from the communication network 840 by the antenna 854 are routed to the receiver 850, which provides for signal amplification, frequency down conversion, filtering, channel selection, etc., and may also provide analog to digital conversion. Analog-to-digital conversion of the received signal allows the DSP 858 to perform more complex communication functions, such as demodulation and decoding. In a similar manner, signals to be transmitted to the network 840 are processed (e.g. modulated and encoded) by the DSP 858 and are then provided to the transmitter 852 for digital to analog conversion, frequency up conversion, filtering, amplification and transmission to the communication network 840 (or networks) via the antenna 856.

In addition to processing communication signals, the DSP 858 provides for control of the receiver 850 and the transmitter 852. For example, gains applied to communication signals in the receiver 850 and transmitter 852 may be adaptively controlled through automatic gain control algorithms implemented in the DSP 858.

In a data communication mode, a received signal, such as a text message or web page download, is processed by the communication subsystem 800 and is input to the processing device 718. The received signal is then further processed by the processing device 718 for an output to the display 716, or alternatively to some other auxiliary I/O device 806. A device user may also compose data items, such as e-mail messages, using the keyboard 714 and/or some other auxiliary I/O device 806, such as a touchpad, a rocker switch, a thumb-wheel, or some other type of input device. The composed data items may then be transmitted over the communication network 840 via the communication subsystem 800.

In a voice communication mode, overall operation of the device is substantially similar to the data communication mode, except that received signals are output to a speaker 810, and signals for transmission are generated by a microphone 812. Alternative voice or audio I/O subsystems, such as a voice message recording subsystem, may also be implemented on the device 710. In addition, the display 716 may also be utilized in voice communication mode, for example to display the identity of a calling party, the duration of a voice call, or other voice call related information.

The short-range communications subsystem enables communication between the mobile communication device 710 and other proximate systems or devices, which need not necessarily be similar devices. For example, the short-range communications subsystem may include an infrared device and associated circuits and components, or a BLUETOOTH communication module to provide for communication with similarly-enabled systems and devices.

Although the keyboards or keypads described herein Are in the context of a plurality of keys, the term keyboard or keypad may also be used equally in the context of a touchscreen or other touch-type keyboards.

While various features of the claimed embodiments are presented above, it should be understood that the features may be used singly or in any combination thereof. Therefore, the claimed embodiments are not to be limited to only the specific embodiments depicted herein.

Further, it should be understood that variations and modifications may occur to those skilled in the art to which the claimed embodiments pertain. The embodiments described herein are exemplary. The disclosure may enable those skilled in the art to make and use embodiments having alternative elements that likewise correspond to the elements recited in the claims. The intended scope may thus include other embodiments that do not differ or that insubstantially differ from the literal language of the claims. The scope of the example embodiments is accordingly defined as set forth in the patent claims.

## Claims

1. A system for informing a user of functions or characters associated with keys on a mobile communication device (10, 110, 710), comprising:
a keyboard (20, 1020, 714, 220, 320) having keys, each of which is associated with indicia corresponding to at least one of alphabetic characters, numbers, and functions, wherein at least some of the keys are each associated with at least one number or function and are operable to produce Dual-Tone Multi-Frequency DTMF codes, and wherein at least some of the keys are each associated with at least one alphabetic character and are arranged in a non-ITU Standard E.161 phone keypad layout;
a display (15, 415, 1015, 716); and
a processor (718) in signal communication with the display and the keyboard, said processor being configured to:
execute a program for displaying a virtual representation (425) of at least a portion of the keyboard and simultaneously displaying help information on one or more virtually represented keys of the portion of the keyboard being displayed, said virtually represented keys representing the keys that are operable to produce DTMF codes and said help information displaying an associated alphabetic character key or function; and
convert an actuation of a key represented by one of the virtually represented keys into a DTMF code associated with the at least one number or function associated with that key,
wherein the keys associated with a number are arranged on the keyboard in four horizontally centered rows:
a first row comprising, from left to right, a key associated with the number 1, a key associated with the number 2, and a key associated with the number 3;
a second row below the first row and comprising, from left to right, a key associated with the number 4, a key associated with the number 5, and a key associated with the number 6;
a third row below the first second row and comprising, from left to right, a key associated with the number 7, a key associated with the number 8, and a key associated with the number 9; and
a fourth row below the third row and comprising a key associated with the number 0.

2. The system of claim 1, wherein the virtually represented keys on the display have the approximate shape and size of keys on the keyboard (20, 1020, 714, 220, 320).

3. The system of claim 1, wherein the help information displays twelve keys of the keyboard (20, 1020, 714, 220, 320) associated with alphabetic characters.

4. The system of claim 1, wherein the help information displays one or more remote answering service menu options that correspond to the one or more keys virtually represented on the display (15, 415, 1015, 716).

5. The system of claim 1, wherein the help information displays a voice mail command that corresponds to the one or more keys virtually represented on the display (15, 415, 1015, 716).

6. The system of claim 1, wherein the mobile communication device is a telephone that is in phone mode.

7. The system of claim 1, further comprising a memory (816) operable to store user specified help information.

8. The system of claim 7, wherein the processor (718) and memory (816) are operable to store a user specified phone number in association with the user specified help information.

9. The system of claim 7, wherein the processor (718) and memory (816) are further operable to display the stored user specified help information when signaled to do so by a user.

10. The system of claim 9, wherein the processor (718) is operable to display specified help information associated with the user specified phone number after the user specified phone number is dialed.

11. The system of claim 1, wherein the display (15, 415, 1015, 716) is operable to present the help information when signaled to do so by a user.

12. The system of claim 1, wherein the processor (718) is operable to receive a data signal containing the help information and display the received help information as a virtual representation (425).

13. The mobile communication device of claim 1, wherein the keyboard (20, 1020, 714, 220, 320) has a QWERTY (1020), AZERTY, DVORAK, or QWERTZ keyboard layout.

14. The system of claim 13, wherein the keyboard layout is reduced keyboard layout, wherein the alphabetic characters are presented on fewer than twenty-six keys.

15. The system of claim 1, wherein the portion of the keyboard having alphabetic characters is arranged in standard keyboard layout.

16. The system of claim 15, wherein the display (15, 415, 1015, 716) is further operable to display both a number and alphabetic character corresponding to a telephone number on the display.

17. The system of claim 16, wherein at least some of the numbers share keys with the alphabetic characters.

18. A method for informing a user of functions associated with keys on a mobile communication device (10, 110, 710) having a display (15, 415, 1015, 716) and a keyboard (20, 1020, 714, 220, 320), the keyboard having keys, each of which is associated with indicia corresponding to at least one of alphabetic characters, numbers and functions, wherein at least some of the keys are each associated with at least one number or function and are operable to produce Dual-Tone Multiple-Frequency DTMF codes and wherein at least some of the keys are each associated with at least one alphabetic character and are arranged in a non-ITU Standard E161 phone keypad layout; the method comprising the steps of:
dialing a phone number to initiate a phone call;
answering the phone call;
processing a signal including help information in the communication device;
displaying a virtual representation (425) of at least a portion of the keyboard on the display and simultaneously displaying help information on one or more virtually represented keys of the portion of the keyboard being displayed, said virtually represented keys representing the keys that are operable to produce DTMF codes and the said help information displaying an associated function or character key in accordance with ITU Standard E.161 keypad layout; and
converting an actuation of one of the keys of the keyboard represented by one of the virtually represented keys into a DTMF code associated with the at least one number or function associated with that key,
wherein the keys associated with a number are arranged on the keyboard in four horizontally centered rows:
a first row comprising, from left to right, a key associated with the number 1, a key associated with the number 2, and a key associated with the number 3;
a second row below the first row and comprising, from left to right, a key associated with the number 4, a key associated with the number 5, and a key associated with the number 6;
a third row below the first second row and comprising, from left to right, a key associated with the number 7, a key associated with the number 8, and a key associated with the number 9; and
a fourth row below the third row and comprising a key associated with the number 0.

19. The method of claim 18, further comprising the step of transmitting the signal from an automated service to the communication device.

20. The method of claim 19, further comprising the steps of:
inputting a command to the automated service;
transmitting a second signal from the automated service that includes further help information;
processing the second signal in the communication device; and
displaying a second virtual representation of at least a portion of the keypad, the second virtual representation including the further help information.

21. The method of claim 19, wherein the help information comprises at least one of: a directory of names, functions associated with an answering system, and functions associated with a voice mail system.

22. The method of claim 19, further comprising the step of storing the help information in the communication device (10, 110, 710).

23. The method of claim 20, wherein the further help information comprises a list of names grouped by last names.

## Patentansprüche

1. Ein System zum Informieren eines Benutzers über Funktionen oder Zeichen, die mit Tasten assoziiert sind, auf einer mobilen Kommunikationsvorrichtung (10, 110, 710), aufweisend:
eine Tastatur (20, 1020, 714, 220, 320) mit Tasten, von denen jede mit Indicia assoziiert ist, die zumindest einem aus alphabetische Zeichen, Zahlen und Funktionen entsprechen, wobei zumindest einige der Tasten jeweils mit zumindest einer Zahl oder Funktion assoziiert sind und betriebsfähig sind, DTMF(Dual-Tone Multi-Frequency)-Codes zu erzeugen, und wobei zumindest einige der Tasten jeweils mit zumindest einem alphabetischen Zeichen assoziiert sind und in einer nicht-ITU-Standard-E.161-Telefontastatur-Anordnung angeordnet sind;
eine Anzeige (15, 415, 1015, 716); und
einen Prozessor (718) in Signalkommunikation mit der Anzeige und der Tastatur, wobei der Prozessor konfiguriert ist zum:
Ausführen eines Programms zum Anzeigen einer virtuellen Darstellung (425) von zumindest einem Teil der Tastatur und gleichzeitiges Anzeigen von Hilfeinformation auf einer oder mehreren virtuell dargestellten Tasten des Teils der Tastatur, die angezeigt wird, wobei die virtuell dargestellten Tasten die Tasten repräsentieren, die betriebsfähig sind zum Erzeugen von DTMF-Codes, und die Hilfeinformation eine assoziierte "alphabetisches Zeichen"-Taste oder -Funktion anzeigt; und
Umwandeln einer Betätigung einer Taste, die durch eine der virtuell dargestellten Tasten repräsentiert wird, in einen DTMF-Code, der mit der zumindest einen Zahl oder Funktion assoziiert ist, die mit dieser Taste assoziiert ist,
wobei die Tasten, die mit einer Zahl assoziiert sind, auf der Tastatur in vier horizontal zentrierten Reihen angeordnet sind:
eine erste Reihe, die von links nach rechts eine mit der Zahl 1 assoziierte Taste, eine mit der Zahl 2 assoziierte Taste und eine mit der Zahl 3 assoziierte Taste aufweist;
eine zweite Reihe unter der ersten Reihe, die von links nach rechts eine mit der Zahl 4 assoziierte Taste, eine mit der Zahl 5 assoziierte Taste und eine mit der Zahl 6 assoziierte Taste aufweist;
eine dritte Reihe unter der zweiten Reihe, die von links nach rechts eine mit der Zahl 7 assoziierte Taste, eine mit der Zahl 8 assoziierte Taste und eine mit der Zahl 9 assoziierte Taste aufweist; und
eine vierte Reihe unter der dritten Reihe, die eine mit der Zahl 0 assoziierte Taste aufweist.

2. Das System gemäß Anspruch 1, wobei die virtuell dargestellten Tasten auf der Anzeige die ungefähre Form und Größe von Tasten auf der Tastatur (20, 1020, 714, 220, 320) haben.

3. Das System gemäß Anspruch 1, wobei die Hilfeinformation zwölf Tasten der Tastatur (20, 1020, 714, 220, 320) anzeigt, die mit alphabetischen Zeichen assoziiert sind.

4. Das System gemäß Anspruch 1, wobei die Hilfeinformation eine oder mehrere "entfernter Antwortdienst"-Menü-Option(en) anzeigt, die der einen oder mehreren Taste(n) entspricht/entsprechen, die virtuell auf der Anzeige (15, 415, 1015, 716) dargestellt wird/werden.

5. Das System gemäß Anspruch 1, wobei die Hilfeinformation einen Sprachnachrichtbefehl anzeigt, der der einen oder mehreren Taste(n) entspricht, die virtuell auf der Anzeige (15, 415, 1015, 716) dargestellt wird/werden.

6. Das System gemäß Anspruch 1, wobei die mobile Kommunikationsvorrichtung ein Telefon ist, das in einem Telefoniermodus ist.

7. Das System gemäß Anspruch 1, das weiter einen Speicher (816) aufweist, der betriebsfähig ist, eine von einem Benutzer spezifizierte Hilfeinformation zu speichern.

8. Das System gemäß Anspruch 7, wobei der Prozessor (718) und der Speicher (816) betriebsfähig sind, eine von einem Benutzer spezifizierte Telefonnummer in Verbindung mit der von dem Benutzer spezifizierten Hilfeinformation zu speichern.

9. Das System gemäß Anspruch 7, wobei der Prozessor (718) und der Speicher (816) weiter betriebsfähig sind, die gespeicherte von dem Benutzer spezifizierte Hilfeinformation anzuzeigen, wenn dies von einem Benutzer signalisiert wird.

10. Das System gemäß Anspruch 9, wobei der Prozessor (718) betriebsfähig ist, eine spezifizierte Hilfeinformation, die mit der von dem Benutzer spezifizierten Telefonnummer assoziiert ist, anzuzeigen, nachdem die von dem Benutzer spezifizierte Telefonnummer gewählt ist.

11. Das System gemäß Anspruch 1, wobei die Anzeige (15, 415, 1015, 716) betriebsfähig ist, die Hilfeinformation zu präsentieren, wenn dies von einem Benutzer signalisiert wird.

12. Das System gemäß Anspruch 1, wobei der Prozessor (718) betriebsfähig ist, ein Datensignal zu empfangen, das die Hilfeinformation enthält, und die empfangene Hilfeinformation als eine virtuelle Darstellung (425) anzuzeigen.

13. Die mobile Kommunikationsvorrichtung gemäß Anspruch 1, wobei die Tastatur (20, 1020, 714, 220, 320) eine QWERTY- (1020), AZERTY-, DVORAK- oder QWERTZ-Tastaturanordnung hat.

14. Das System gemäß Anspruch 13, wobei die Tastaturanordnung eine reduzierte Tastaturanordnung ist, wobei die alphabetischen Zeichen auf weniger als sechsundzwanzig Tasten dargestellt werden.

15. Das System gemäß Anspruch 1, wobei der Teil der Tastatur mit alphabetischen Zeichen in einer Standard- Tastaturanordnung angeordnet ist.

16. Das System gemäß Anspruch 15, wobei die Anzeige (15, 415, 1015, 716) weiter betriebsfähig ist, sowohl eine Zahl als auch ein alphabetisches Zeichen entsprechend einer Telefonnummer auf der Anzeige anzuzeigen.

17. Das System gemäß Anspruch 16, wobei zumindest einige der Zahlen die Tasten mit den alphabetischen Zeichen teilen.

18. Ein Verfahren zum Informieren eines Benutzers über Funktionen, die mit Tasten auf einer mobilen Kommunikationsvorrichtung (10, 110, 710) assoziiert sind, die eine Anzeige (15, 415, 1015, 716) und eine Tastatur (20, 1020, 714, 220, 320) hat, wobei die Tastatur Tasten hat, von denen jede mit Indicia assoziiert ist, die zumindest einem aus alphabetische Zeichen, Zahlen und Funktionen entsprechen, wobei zumindest einige der Tasten jeweils mit zumindest einer Zahl oder Funktion assoziiert sind und betriebsfähig sind, DTMF(Dual-Tone Multi-Frequency)-Codes zu erzeugen, und wobei zumindest einige der Tasten jeweils mit zumindest einem alphabetischen Zeichen assoziiert sind und in einer nicht-ITU-Standard-E.161-Telefontastatur-Anordnung angeordnet sind;
wobei das Verfahren die Schritte aufweist:
Wählen einer Telefonnummer, um einen Telefonanruf zu initiieren;
Annehmen des Telefonanrufs;
Verarbeiten eines Signals, das Hilfeinformation umfasst, in der Kommunikationsvorrichtung;
Anzeigen einer virtuellen Darstellung (425) von zumindest einem Teil der Tastatur auf der Anzeige und gleichzeitiges Anzeigen von Hilfeinformation auf einer oder mehreren virtuell dargestellten Tasten des Teils der Tastatur,
die angezeigt wird, wobei die virtuell dargestellten Tasten die Tasten repräsentieren, die betriebsfähig sind zum Erzeugen von DTMF-Codes, und die Hilfeinformation eine assoziierte Funktion oder Zeichen-Taste in Übereinstimmung mit einer ITU-Standard-E.161-Tastaturanordnung anzeigt; und
Umwandeln einer Betätigung einer der Tasten der Tastatur, die durch eine der virtuell dargestellten Tasten repräsentiert wird, in einen DTMF-Code,
der mit der zumindest einen Zahl oder Funktion assoziiert ist, die mit dieser Taste assoziiert ist,
wobei die Tasten, die mit einer Zahl assoziiert sind, auf der Tastatur in vier horizontal zentrierten Reihen angeordnet sind:
eine erste Reihe, die von links nach rechts eine mit der Zahl 1 assoziierte Taste, eine mit der Zahl 2 assoziierte Taste und eine mit der Zahl 3 assoziierte Taste aufweist;
eine zweite Reihe unter der ersten Reihe, die von links nach rechts eine mit der Zahl 4 assoziierte Taste, eine mit der Zahl 5 assoziierte Taste und eine mit der Zahl 6 assoziierte Taste aufweist;
eine dritte Reihe unter der zweiten Reihe, die von links nach rechts eine mit der Zahl 7 assoziierte Taste, eine mit der Zahl 8 assoziierte Taste und eine mit der Zahl 9 assoziierte Taste aufweist; und
eine vierte Reihe unter der dritten Reihe, die eine mit der Zahl 0 assoziierte Taste aufweist.

19. Das Verfahren gemäß Anspruch 18, das weiter den Schritt eines Übertragens des Signals von einem automatisierten Dienst an die Kommunikationsvorrichtung aufweist.

20. Das Verfahren gemäß Anspruch 19, das weiter die Schritte aufweist:
Eingeben eines Befehls an den automatisierten Dienst;
Übertragen eines zweiten Signals von dem automatisierten Dienst, das weitere Hilfeinformation umfasst;
Verarbeiten des zweiten Signals in der Kommunikationsvorrichtung; und
Anzeigen einer zweiten virtuellen Darstellung von zumindest einem Teil der Tastatur, wobei die zweite virtuelle Darstellung die weitere Hilfeinformation umfasst.

21. Das Verfahren gemäß Anspruch 19, wobei die Hilfeinformation zumindest eines aufweist aus: ein Verzeichnis von Namen, Funktionen, die mit einem Antwortsystem assoziiert sind, und Funktionen, die mit einem Sprachnachrichtsystem assoziiert sind.

22. Das Verfahren gemäß Anspruch 19, das weiter den Schritt eines Speicherns der Hilfeinformation in der Kommunikationsvorrichtung (10, 110, 710) aufweist.

23. Das Verfahren gemäß Anspruch 20, wobei die weitere Hilfeinformation eine Liste von Namen, gruppiert nach Nachnamen, aufweist.

## Revendications

1. Système pour informer un utilisateur de fonctions ou de caractères associés à des touches sur un dispositif de communication mobile (10, 110, 710), comprenant :
un clavier (20, 1020, 714, 220, 320) ayant des touches, chacune étant associée à des indices correspondant à au moins un parmi des caractères alphabétiques, des nombres, et des fonctions, dans lequel au moins certaines des touches sont chacune associées à au moins un nombre ou une fonction et sont exploitables pour produire des codes DTMF, multifréquence à deux tonalités, et dans lequel au moins certaines des touches sont chacune associées à au moins un caractère alphabétique et sont agencées selon une disposition de clavier téléphonique non standard UIT E.161 ;
un afficheur (15, 415, 1015, 716) ; et
un processeur (718) en communication de signal avec l'afficheur et le clavier, ledit processeur étant configuré pour :
exécuter un programme pour afficher une représentation virtuelle (425) d'au moins une partie du clavier et afficher simultanément des informations d'aide sur une ou plusieurs touches représentées virtuellement de la partie du clavier qui est affichée, lesdites touches représentées virtuellement représentant les touches qui sont exploitables pour produire des codes DTMF et lesdites informations d'aide affichant une touche de caractère alphabétique ou une fonction associée ; et
convertir un actionnement d'une touche représentée par une des touches représentées virtuellement en un code DTMF associé audit au moins un nombre ou fonction associé à cette touche,
dans lequel les touches associées à un nombre sont agencées sur le clavier dans quatre lignes centrées horizontalement :
une première ligne comprenant, de gauche à droite, une touche associée au nombre 1, une touche associée au nombre 2, et une touche associée au nombre 3 ;
une deuxième ligne au-dessous de la première ligne et comprenant, de gauche à droite, une touche associée au nombre 4, une touche associée au nombre 5, et une touche associée au nombre 6 ;
une troisième ligne au-dessous de la deuxième ligne et comprenant, de gauche à droite, une touche associée au nombre 7, une touche associée au nombre 8, et une touche associée au nombre 9 ; et
une quatrième ligne au-dessous de la troisième ligne et comprenant une touche associée au nombre 0.

2. Système selon la revendication 1, dans lequel les touches représentées virtuellement sur l'afficheur ont la forme et la taille approximatives de touches sur le clavier (20, 1020, 714, 220, 320).

3. Système selon la revendication 1, dans lequel les informations d'aide affichent douze touches du clavier (20, 1020, 714, 220, 320) associées à des caractères alphabétiques.

4. Système selon la revendication 1, dans lequel les informations d'aide affichent une ou plusieurs options de menu de service de réponse à distance qui correspondent aux une ou plusieurs touches représentées virtuellement sur l'afficheur (15, 415, 1015, 716).

5. Système selon la revendication 1, dans lequel les informations d'aide affichent une commande de messagerie vocale qui correspond aux une ou plusieurs touches représentées virtuellement sur l'afficheur (15, 415, 1015, 716).

6. Système selon la revendication 1, dans lequel le dispositif de communication mobile est un téléphone qui est en mode téléphone.

7. Système selon la revendication 1, comprenant en outre une mémoire (816) exploitable pour stocker des informations d'aide spécifiées par l'utilisateur.

8. Système selon la revendication 7, dans lequel le processeur (718) et la mémoire (816) sont exploitables pour stocker un numéro de téléphone spécifié par l'utilisateur en association avec les informations d'aide spécifiées par l'utilisateur.

9. Système selon la revendication 7, dans lequel le processeur (718) et la mémoire (816) sont en outre exploitables pour afficher les informations d'aide spécifiées par l'utilisateur stockées lorsqu'il est signalé de le faire par un utilisateur.

10. Système selon la revendication 9, dans lequel le processeur (718) est exploitable pour afficher des informations d'aide spécifiées associées au numéro de téléphone spécifié par l'utilisateur après que le numéro de téléphone spécifié par l'utilisateur est composé.

11. Système selon la revendication 1, dans lequel l'afficheur (15, 415, 1015, 716) est exploitable pour présenter les informations d'aide lorsqu'il est signalé de le faire par un utilisateur.

12. Système selon la revendication 1, dans lequel le processeur (718) est exploitable pour recevoir un signal de données contenant les informations d'aide et afficher les informations d'aide reçues comme une représentation virtuelle (425).

13. Dispositif de communication mobile selon la revendication 1, dans lequel le clavier (20, 1020, 714, 220, 320) a une disposition de clavier QWERTY (1020), AZERTY, DVORAK, ou QWERTZ.

14. Système selon la revendication 13, dans lequel la disposition de clavier est une disposition de clavier réduite, dans lequel les caractères alphabétiques sont présentés sur moins de vingt-six touches.

15. Système selon la revendication 1, dans lequel la partie du clavier ayant des caractères alphabétiques est agencée selon une disposition de clavier standard.

16. Système selon la revendication 15, dans lequel l'afficheur (15, 415, 1015, 716) est en outre exploitable pour afficher à la fois un nombre et un caractère alphabétique correspondant à un numéro de téléphone sur l'afficheur.

17. Système selon la revendication 16, dans lequel au moins certains des nombres partagent des touches avec les caractères alphabétiques.

18. Procédé pour informer un utilisateur de fonctions associées à des touches sur un dispositif de communication mobile (10, 110, 710) ayant un afficheur (15, 415, 1015, 716) et un clavier (20, 1020, 714, 220, 320), le clavier ayant des touches, chacune étant associée à des indices correspondant à au moins un parmi des caractères alphabétiques, des nombres et des fonctions, dans lequel au moins certaines des touches sont chacune associées à au moins un nombre ou une fonction et sont exploitables pour produire des codes DTMF, multifréquence à deux tonalités, et dans lequel au moins certaines des touches sont chacune associées à au moins un caractère alphabétique et sont agencées selon une disposition de clavier téléphonique non standard UIT E.161 ; le procédé comprenant les étapes consistant à :
composer un numéro de téléphone pour initier un appel téléphonique ;
répondre à l'appel téléphonique ;
traiter un signal comprenant des informations d'aide dans le dispositif de communication ;
afficher une représentation virtuelle (425) d'au moins une partie du clavier sur l'afficheur et afficher simultanément des informations d'aide sur une ou plusieurs touches représentées virtuellement de la partie du clavier qui est affichée, lesdites touches représentées virtuellement représentant les touches qui sont exploitables pour produire des codes DTMF et lesdites informations d'aide affichant une touche de fonction ou de caractère associée conformément à la disposition de clavier standard UIT E.161 ; et
convertir un actionnement d'une des touches du clavier représentée par une des touches représentées virtuellement en un code DTMF associé à au moins un nombre ou une fonction associé à cette touche,
dans lequel les touches associées à un nombre sont agencées sur le clavier dans quatre lignes centrées horizontalement :
une première ligne comprenant, de gauche à droite, une touche associée au nombre 1, une touche associée au nombre 2, et une touche associée au nombre 3 ;
une deuxième ligne au-dessous de la première ligne et comprenant, de gauche à droite, une touche associée au nombre 4, une touche associée au nombre 5, et une touche associée au nombre 6 ;
une troisième ligne au-dessous de la deuxième ligne et comprenant, de gauche à droite, une touche associée au nombre 7, une touche associée au nombre 8, et une touche associée au nombre 9 ; et
une quatrième ligne au-dessous de la troisième ligne et comprenant une touche associée au nombre 0.

19. Procédé selon la revendication 18, comprenant en outre l'étape consistant à transmettre le signal du service automatisé au dispositif de communication.

20. Procédé selon la revendication 19, comprenant en outre les étapes consistant à :
entrer une commande vers le service automatisé ;
transmettre un second signal depuis le service automatisé qui comprend des informations d'aide supplémentaires ;
traiter le second signal dans le dispositif de communication ; et
afficher une seconde représentation virtuelle d'au moins une partie du clavier, la seconde représentation virtuelle comprenant les informations d'aide supplémentaires.

21. Procédé selon la revendication 19, dans lequel les informations d'aide comprennent au moins un parmi : un répertoire de noms, des fonctions associées à un système de réponse, et des fonctions associées à un système de messagerie vocale.

22. Procédé selon la revendication 19, comprenant en outre l'étape consistant à stocker les informations d'aide dans le dispositif de communication (10, 110, 710).

23. Procédé selon la revendication 20, dans lequel les informations d'aide supplémentaires comprennent une liste de noms groupés par noms de famille.
